# EUROPÄISCHE PATENTSCHRIFT

(11) **EP 1 758 749 B1**
(45) Veröffentlichungstag und Bekanntmachung des Hinweises auf die Patenterteilung: **07.01.2009**
(21) Anmeldenummer: 05747419.9
(22) Anmeldetag: 30.04.2005
(51) Int. Cl.: B60J 7/14, B60J 7/08

(54) **CABRIOLET-FAHRZEUG**
CONVERTIBLE VEHICLE
VEHICULE CABRIOLET

(30) Priorität: 03.05.2004 DE 102004021576
(43) Veröffentlichungstag der Anmeldung: 07.03.2007
(73) Patentinhaber: Wilhelm Karmann GmbH, 49084 Osnabrück (DE)
(72) Erfinder: BROCKHOFF, Franz-Ulrich, 49565 Bramsche (DE)
(86) Internationale Anmeldenummer: PCT/DE2005/000806
(87) Internationale Veröffentlichungsnummer: WO 2005/105498

(56) Entgegenhaltungen:
- DE-A1- 1 505 494
- DE-A1- 10 147 015
- DE-C1- 19 950 537
- FR-A- 2 859 413

## Beschreibung

Die Erfindung betrifft ein Cabriolet-Fahrzeug mit zumindest zwei Dachteilen nach dem Oberbegriff des Anspruchs 1 sowie ein zugehöriges Fahrzeugdach.

Es sind Cabriolet-Fahrzeuge bekannt, die zwei im geschlossenen Zustand aufeinander folgende Dachteile aufweisen, von denen ein hinteres gegenüber der Karosserie um eine Querachse abwärts schwenkbar ist, so daß es in abgelegter Stellung im wesentlichen horizontal liegt und mit der bei geschlossenem Dach dem Insassenraum zugewandten Seite nach oben zeigt. Das vordere Dachteil ist beim Öffnen um eine im Grenzbereich zwischen den Dachteilen gelegene zweite Querachse an das hintere Dachteil heranschwenkbar und liegt in geöffneter Stellung gegensinnig zu diesem orientiert.

Die DE 102 13 836 A1 zeigt von einer Heckscheibe des hinteren Dachteils getrennte C-Säulen, die in einigen Ausführungsbeispielen gegenüber der Heckscheibe parallel und gleich orientiert einwärts verlagerbar sind. Hierfür müssen jedoch entweder Führungsschienen, Mehrgelenke oder ähnliches sowie zugehörige Antriebsorgane vorgesehen sein, die zumindest großenteils innerhalb der C-Säulen liegen und deren Dickenerstreckung erheblich vergrößern und somit den freien Kopfraum für die Insassen einschränken. Zudem sind diese mechanischen Teile von innen sichtbar und müssen aufwendig verkleidet werden. Bei Einwärtsverlagerung in Richtung der vertikalen Fahrzeuglängsmittelebene werden die C-Säulen außen über die Heckscheibe verlagert, so daß das abgelegte Dachteilpaket eine größere Höhenerstreckung als ohne C-Säulen-Verlagerung beansprucht und daher den verbleibenden Kofferraum zusätzlich verkleinert.

Gemäß der DE 101 47 015 C2 wird der mittlere Dachabschnitt in etwa translatorisch nach oben versetzt. Zwangsläufig müssen dabei die äußeren C-Säulen um Verbindungsachsen einschwenken, wobei sie mit ihrer unteren äußeren Ecke in Richtung einer vertikalen Fahrzeuglängsmittelebene gelangen, also quer einwärts. Dadurch untergreift die benannte Ecke dann den mittleren Dachabschnitt mit der Heckscheibe, ragt also deutlich weiter als der mittlere Dachabschnitt nach unten in den verbleibenden Kofferraum hinein. Dadurch, daß die Ecke auch noch weiter als ursprünglich zur Fahrzeugquermitte hin versetzt ist, ist nicht nur die Höhe, sondern auch die verbleibendie Beladungsbreite des Kofferraums unter dem abgelegten Dach weiter eingeschränkt. Die D1 ist dadurch doppelt nachteilig für den verbleibenden Gepäckraum.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1 sowie durch ein bewegliches Fahrzeugdach mit den Merkmalen des Anspruchs 14. Hinsichtlich vorteilhafter Ausgestaltungen der Erfindung wird auf die weiteren Ansprüche 2 bis 13 verwiesen.

Durch die Erfindung liegen bei geöffnetem Dach die C-Säulen oberhalb der Heckscheibe, so daß das Maß des abgelegten Dachpakets nach unten nicht vergrößert ist. Da das vorgeordnete Dachteil ohnehin in abgelegter Stellung gegenläufig zum hinteren Dachteil orientiert und gewölbt ist, steht für die eingeschwenkten C-Säulen genug Raum zur Verfügung, ohne daß die Dicke des abgelegten Dachpakets zunehmen müßte. Insbesondere können die C-Säulen in den Hohlraum zwischen gegenläufig gewölbten Dachteilen einschwenkbar sein. Das Dachpaket ist deutlich schmaler gegenüber festen C-Säulen, so daß der Ablageraum des Daches verschmälert und die Randfuge eines Verdeckkastendeckels erheblich zur Fahrzeugmitte hin rücken kann, was die Designmöglichkeiten am Fahrzeug verbessert. Die Einschwenkbewegung der C-Säulen ist zudem über Drehachsen mit mechanisch geringem Aufwand möglich. Gleichzeitig ist das Paket der abgelegten Dachteile auch flacher, wodurch auch das Fahrzeugheck in optisch angenehmerem, flacherem Design ausgeführt sein kann. Nach unten hin ragt die gegenüber lackierten Teilen weniger empfindliche Heckscheibe vor, so daß die Beschädigungsgefahr des Daches durch eingeschobene Gepäckstücke minimiert ist.

Sehr vorteilhaft liegen die Drehachsen parallel zur Erstreckungsebene des hinteren Dachteils, wodurch sie flach an dieses angepaßt sein können und nur wenig in Richtung des Insassenraums vorragen. Insbesondere eine Welle zur Ausbildung der Drehachse unterbrochen sein, wobei die Drehmomentübertragung im mittleren Bereich durch die C-Säulen selbst erfolgt und diese nur oben und unten Achsstummel aufweisen, die dann nicht den Insassenraum stören.

An den mittleren Dachabschnitt angehängte C-Säulen können ein geringes Gewicht aufweisen und beispielsweise aus einem Leichtbauwerkstoff gebildet sein. Sie müssen selbst keine tragende Funktion ausüben. Auch die Kinematik zum Verschwenken der angehängten C-Säulen kann einfach und derart ausgebildet sein, daß bei sich öffnendem oder schließendem Dach die C-Säulen ohne weitere Steuer- oder Antriebselemente zwangsweise verschwenkt werden.

Eine besondere Verringerung von für die Dachbewegung erforderlichen Teilen und eine Vereinfachung der Bewegungsmechanik ergibt sich, wenn die Drehachsen der C-Säulen zumindest bereichsweise von Antriebswellen umfaßt sind, die das Heranschwenken des vorgeordneten Dachteils über die Drehbewegung der C-Säulen vermitteln können. Insbesondere kann dann die vordere Hauptführungsstange, die sonst zwischen dem Hauptlager und dem vorgeordneten Dachteil verlaufen, entfallen, was eine wesentliche Designverbesserung und Verminderung einer Klemmgefahr bewirkt. Zudem sind dann keinerlei gesonderte Teile für die Drehbewegung der C-Säulen erforderlich.

Insbesondere ergibt sich eine zuverlässige und nur über Schwenkverbindungen ohne die Gefahr von Verkantungen arbeitende Kinematik, wenn das hintere Dachteil zu seiner Verlagerungsbewegung um eine quer zum Fahrzeug liegende erste Schwenkachse schwenkbar ist, das vorgeordnete Dachteil gegenüber dem hinteren Dachteil um eine parallel hierzu liegende zweite Schwenkachse schwenkbar ist und die Drehachsen der C-Säulen beide Schwenkachsen koppeln.

Auch kann dann außer dem Antrieb für das Verschwenken des hinteren Dachteils gegenüber der Karosserie jeder weitere Antrieb entbehrlich sein.

Eine breite Heckscheibe, deren lichte Weite nicht durch die Drehachsen der C-Säulen eingeengt ist, ist ermöglicht, wenn diese im oberen und unteren Bereich zur vertikalen Fahrzeuglängsmittelebene weisende Ausleger aufweisen, durch die hindurch die Drehachsen verlaufen, wohingegen die C-Säulen über einen bezüglich der Vertikalen mittleren Teil ihrer Erstreckung mit ihren der Fahrzeugmitte zugewandten Kanten weiter außen verlaufen.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:

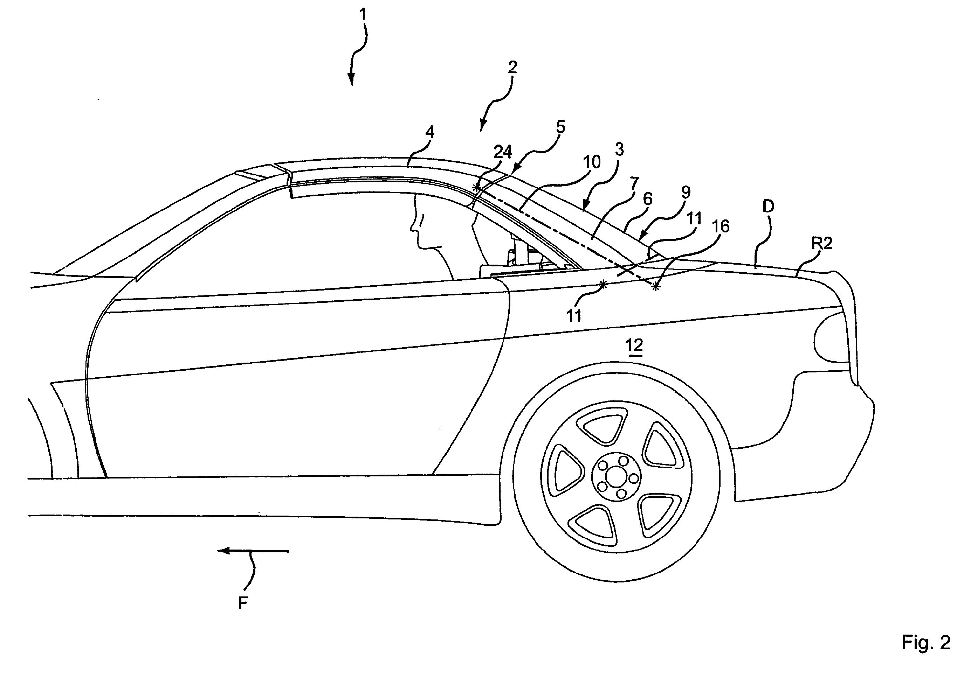

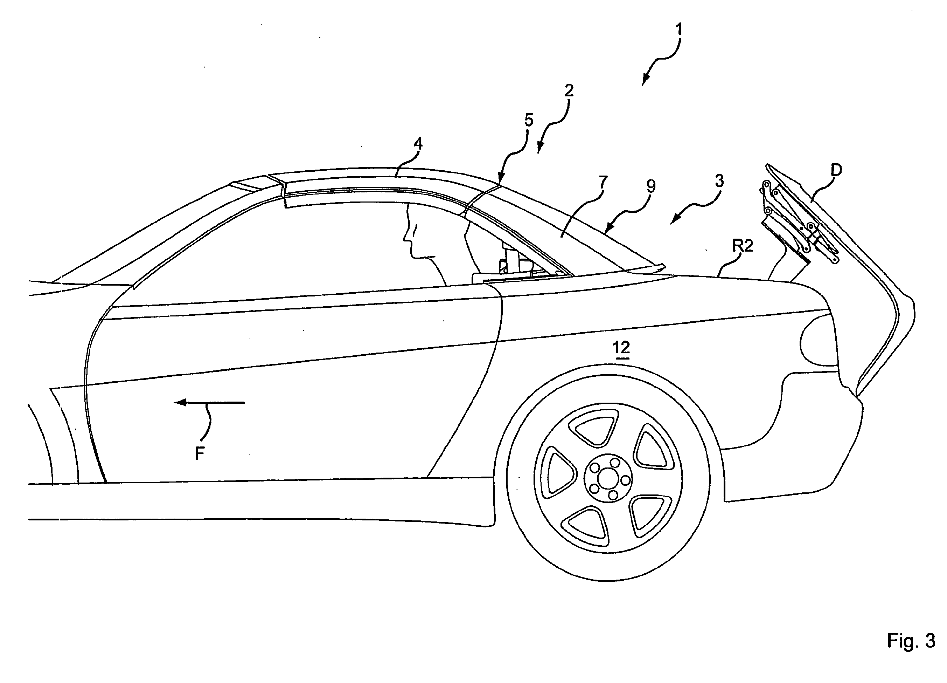

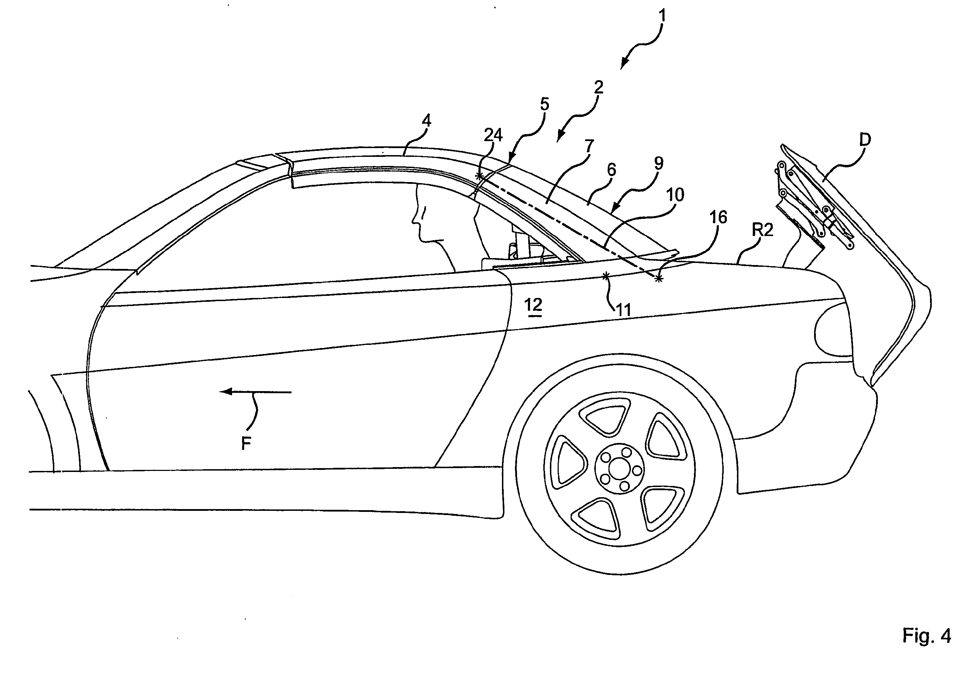

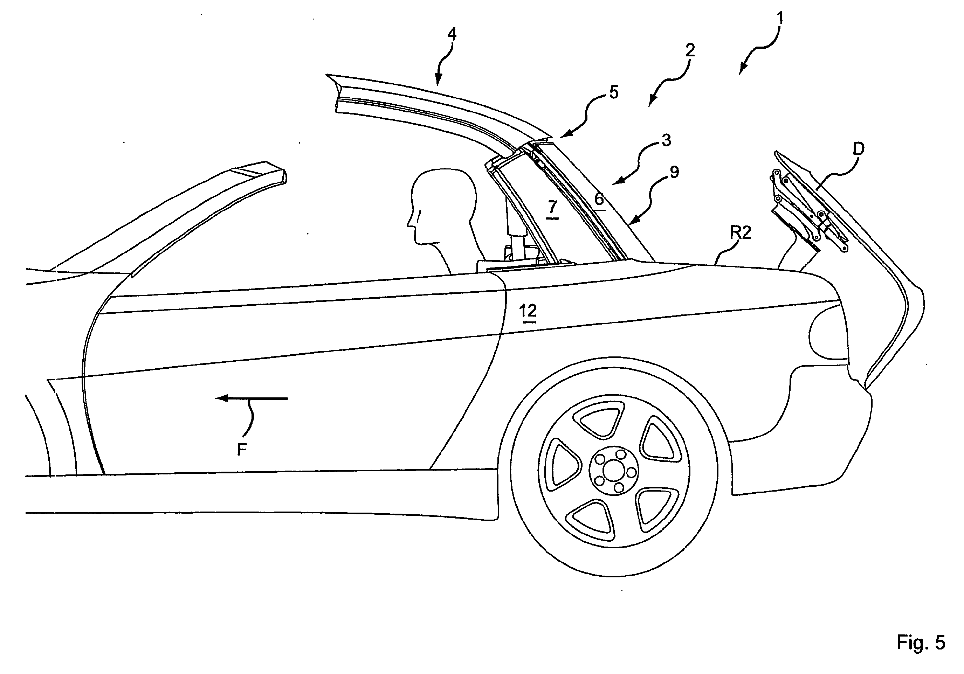

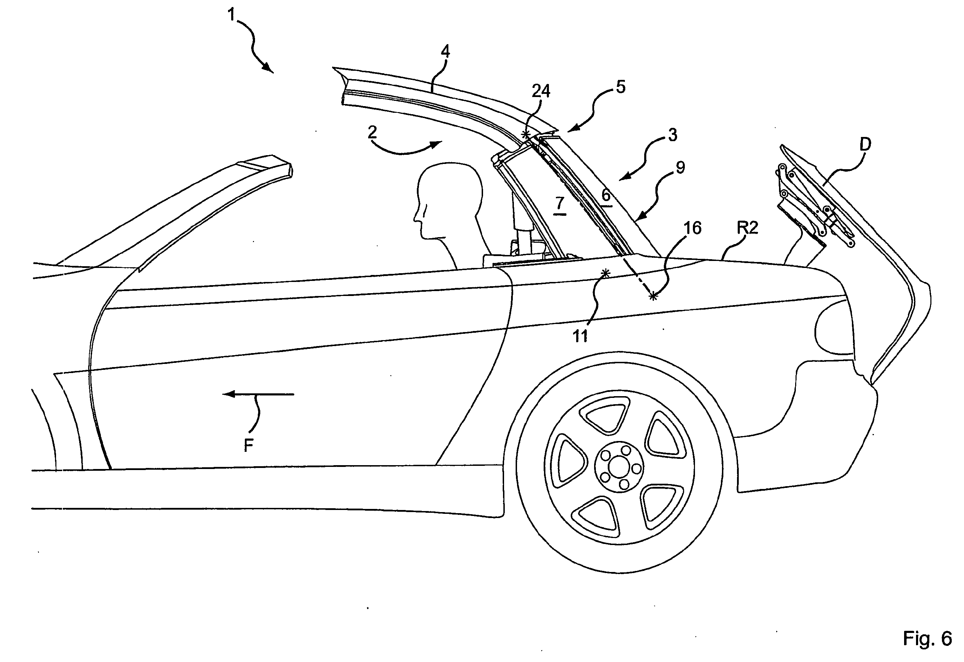

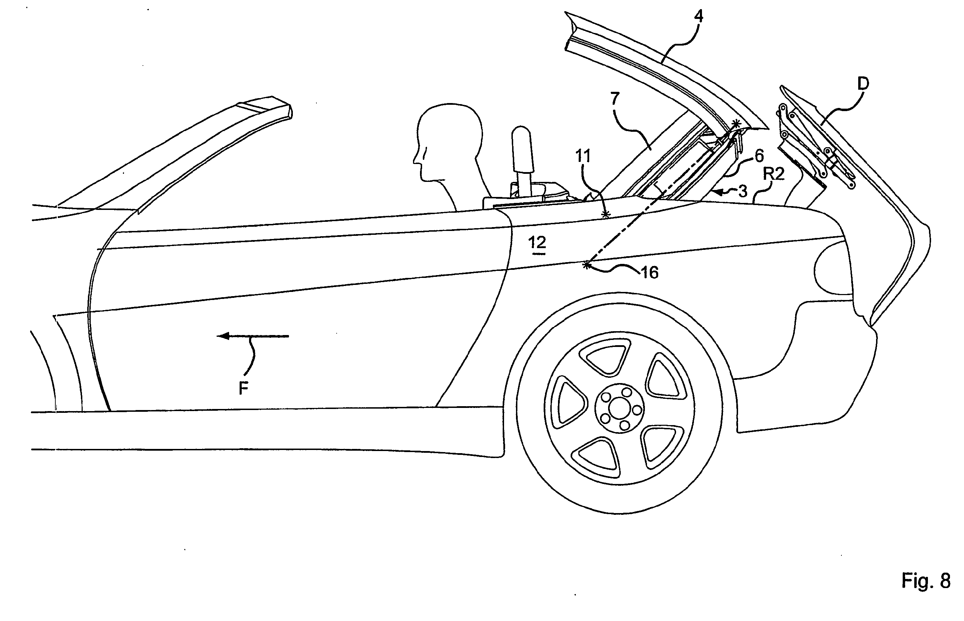

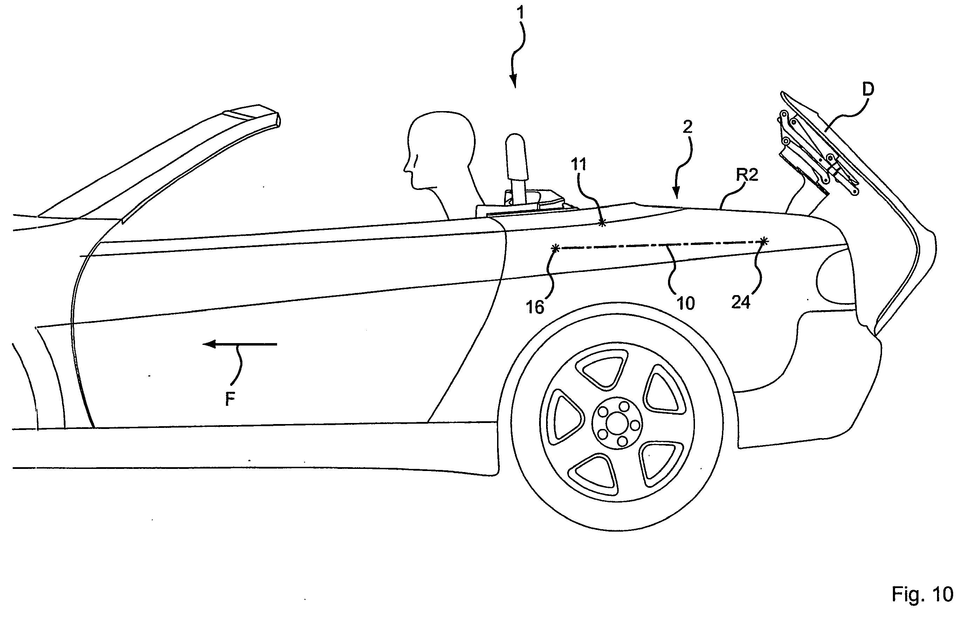

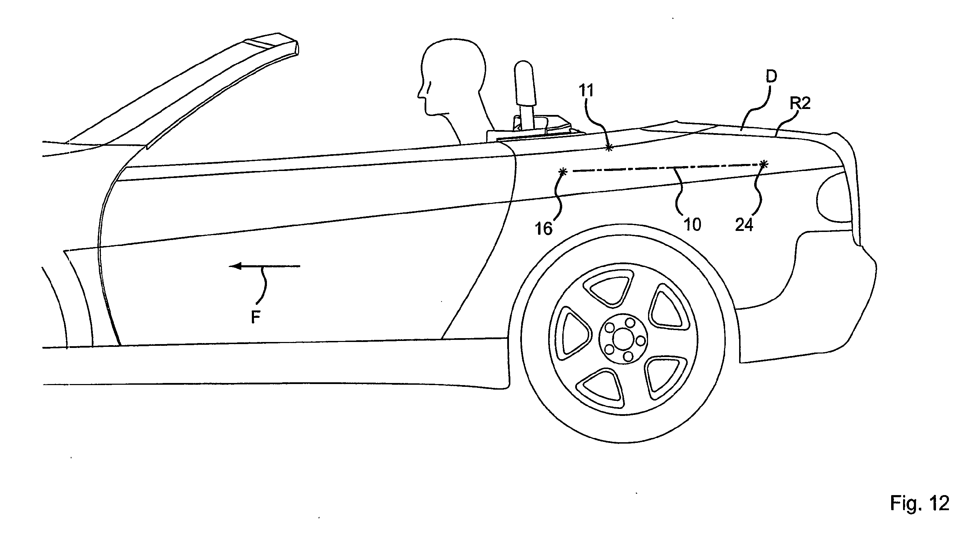

- Fig. 1 bis Fig. 12: die Phasen der Dachöffnung eines erfindungsgemäßen Cabriolet- Fahrzeugs in einer im vorderen Bereich abgebrochenen Seitenansicht, darin
- Fig. 1: das Fahrzeug bei geschlossenem Dach,
- Fig. 2: eine ähnliche Ansicht wie Fig. 1 mit zusätzlich eingezeichneter Drehachse der C-Säulen,
- Fig. 3: eine ähnliche Ansicht wie Fig. 1 bei noch geschlossenem Dach und bereits zur Freigabe einer Durchtrittsöffnung für das Dach geöffnetem Heckdeckel,
- Fig. 4: eine ähnliche Ansicht wie Fig. 3 mit zusätzlich eingezeichneter Drehachse der C-Säulen,
- Fig. 5: eine ähnliche Ansicht wie Fig. 3 bei beginnender Dachöffnung,
- Fig. 6: eine ähnliche Ansicht wie Fig. 5 mit zusätzlich eingezeichneter Drehachse der C-Säulen,
- Fig. 7: eine ähnliche Ansicht wie Fig. 5 bei weiter fortschreitender Dachöffnung,
- Fig. 8: eine ähnliche Ansicht wie Fig. 7 mit zusätzlich eingezeichneter Drehachse der C-Säulen,
- Fig. 9: eine ähnliche Ansicht wie Fig. 7 bei geöffnetem Dach und noch geöffnetem Heckdeckel,
- Fig. 10: eine ähnliche Ansicht wie Fig. 9 mit zusätzlich eingezeichneter Drehachse der C-Säulen,
- Fig. 11: eine ähnliche Ansicht wie Fig. 9 bei vollständig geöffnetem Dach,
- Fig. 12: eine ähnliche Ansicht wie Fig. 11 mit zusätzlich eingezeichneter Drehachse der C-Säulen,
- Fig. 13: eine perspektivische Ansicht des Fahr- zeughecks mit konventioneller Randfuge und zusätzlich eingezeichneter Randfuge des Heckdeckels des erfindungsgemäßen Fahrzeugs,
- Fig. 14 bis Fig. 21: die Phasen der Dachöffnung in perspektivischer Ansicht der in Fahrtrichtung linken Dachhälfte des her- ausgezeichneten Daches, darin

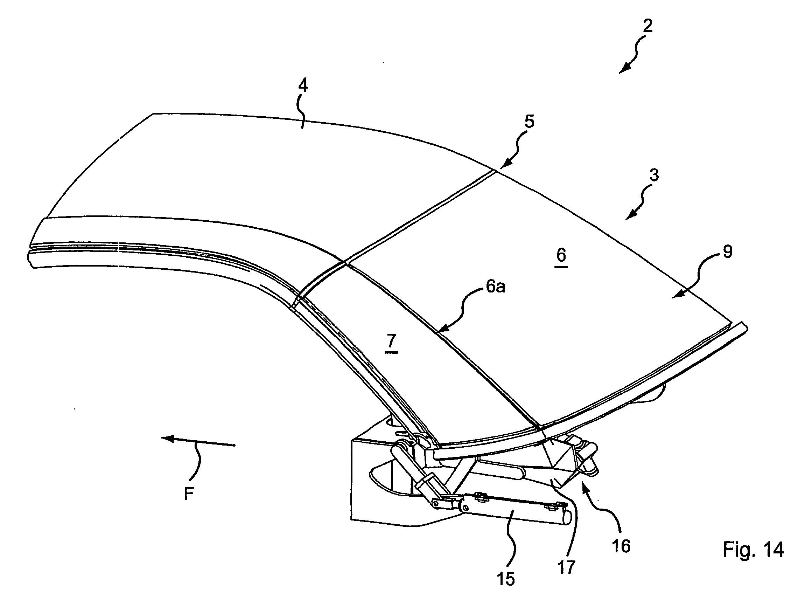

- Fig. 14: eine Ansicht des geschlossenen Daches,

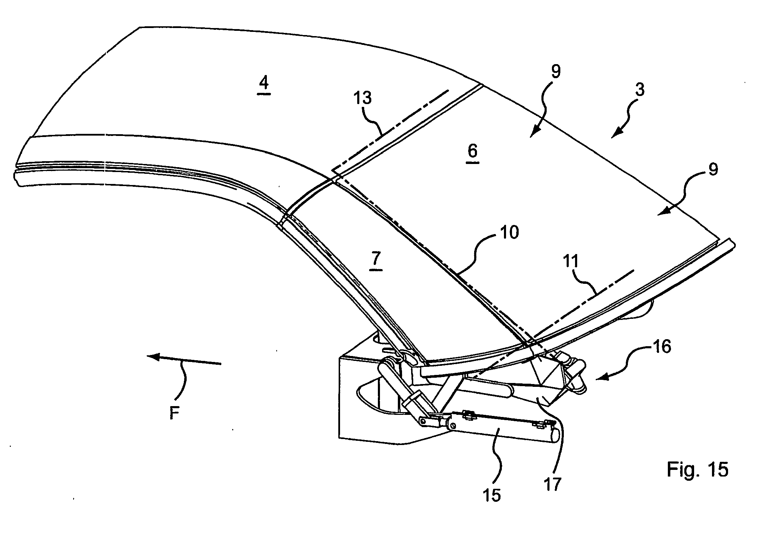

- Fig. 15: eine ähnliche Ansicht wie Fig. 14 mit zusätzlich eingezeichneter Drehachse der C-Säule und Schwenkachsen des hinteren Dachteils gegenüber der Karosserie und der Dachteile gegeneinander,

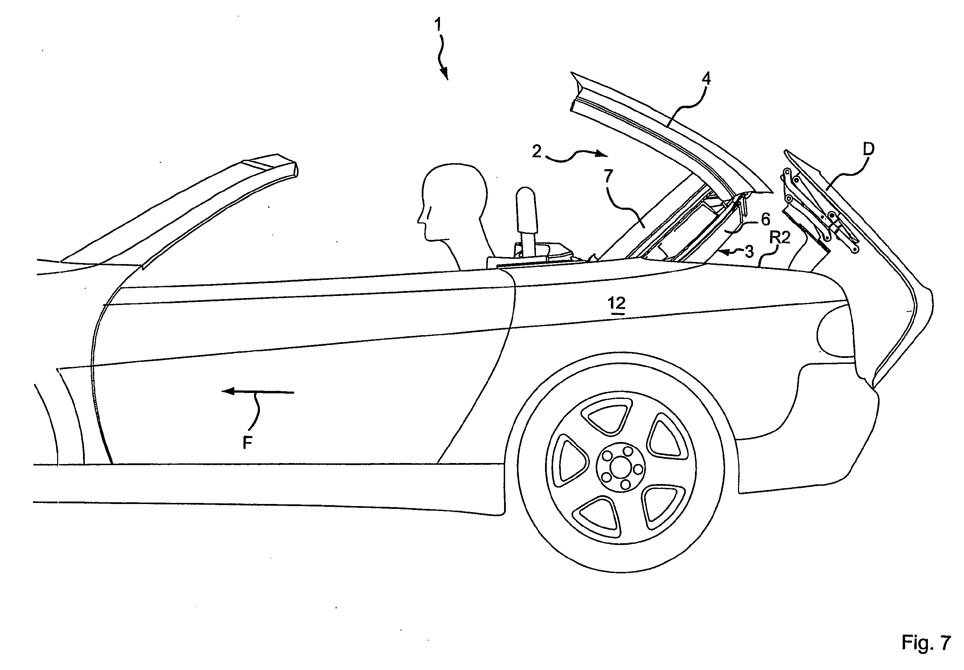

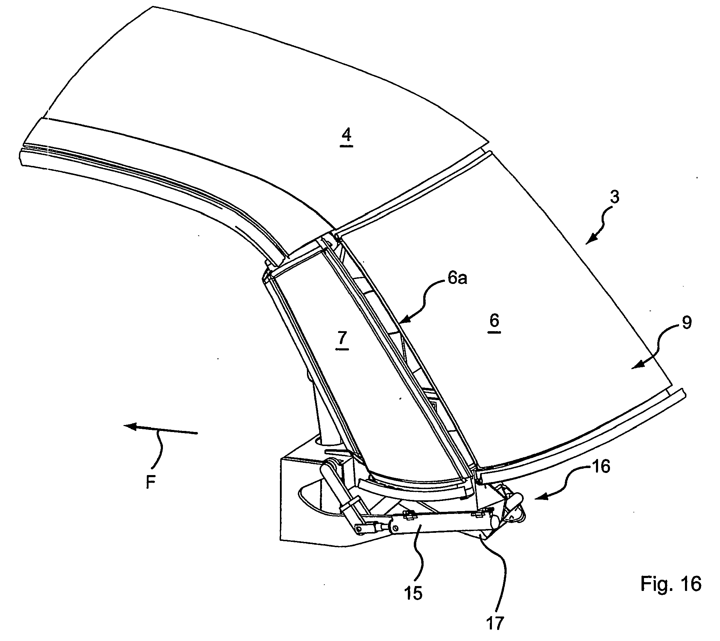

- Fig. 16: eine Ansicht des Daches während seiner beginnenden Öffnung, etwa entsprechend der Stellung nach Fig. 7,

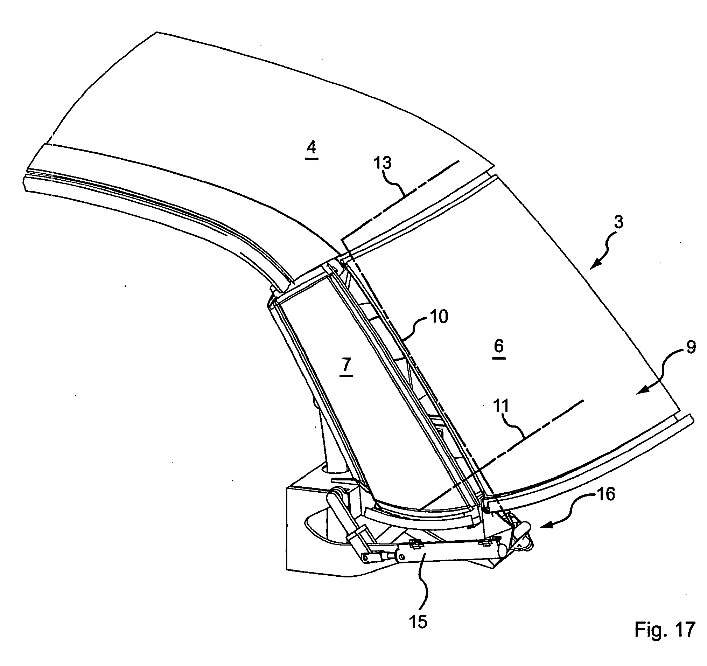

- Fig. 17: eine ähnliche Ansicht wie Fig. 16 mit zusätzlich eingezeichneter Drehachse der C-Säule und Schwenkachsen des hinteren Dachteils gegenüber der Karosserie und der Dachteile gegeneinander,

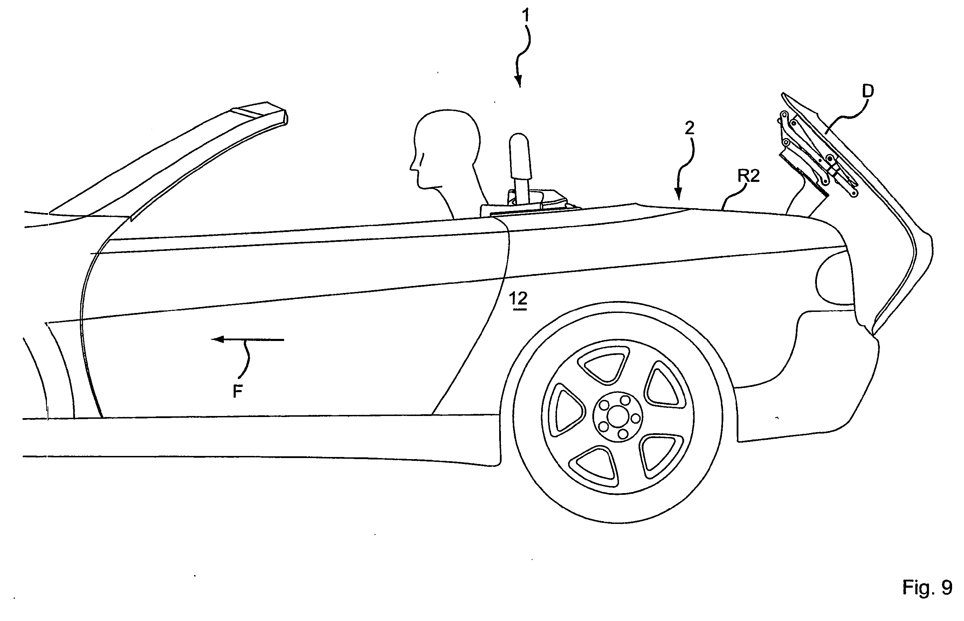

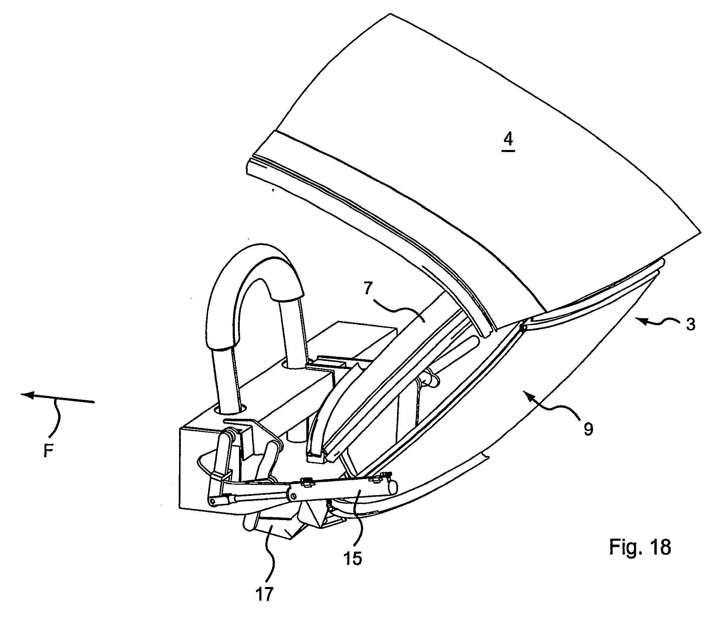

- Fig. 18: eine Ansicht des Daches während seiner fortschreitenden Öffnung, etwa entspre- chend der Stellung nach Fig. 9,

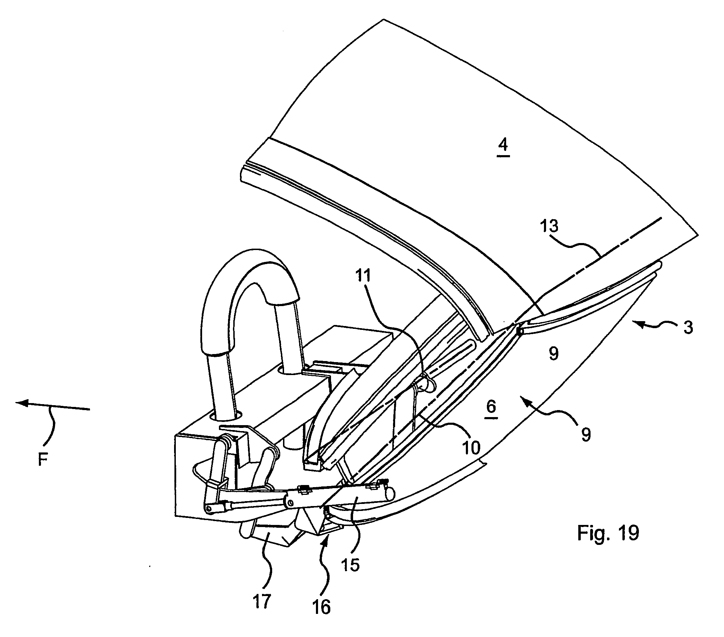

- Fig. 19: eine ähnliche Ansicht wie Fig. 18 mit zusätzlich eingezeichneter Drehachse der C-Säule und Schwenkachsen des hinteren Dachteils gegenüber der Karosserie und der Dachteile gegeneinander,

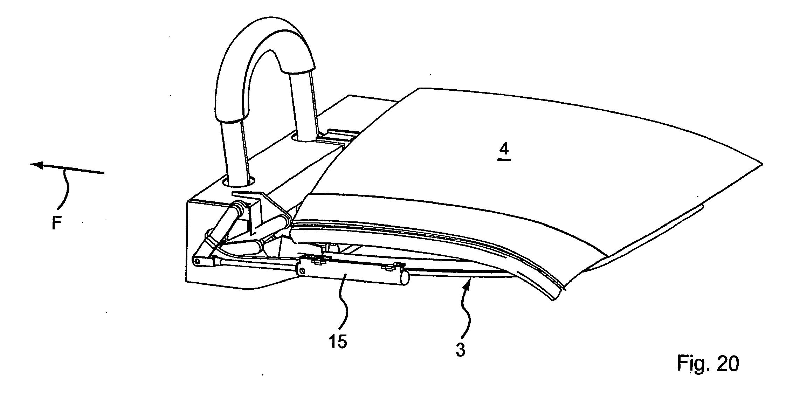

- Fig. 20: eine Ansicht des geöffneten Daches,

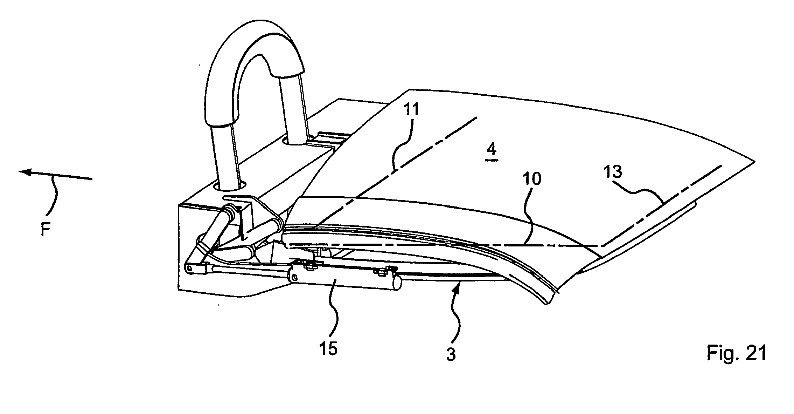

- Fig. 21: eine ähnliche Ansicht wie Fig. 20 mit zusätzlich eingezeichneter Drehachse der C-Säule und Schwenkachsen des hinteren Dachteils gegenüber der Karosserie und der Dachteile gegeneinander,

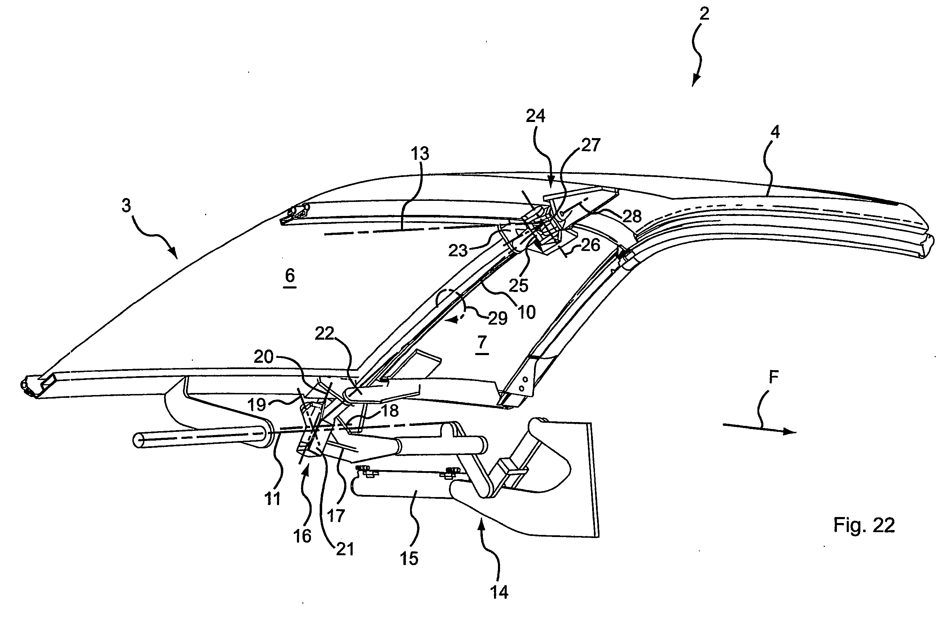

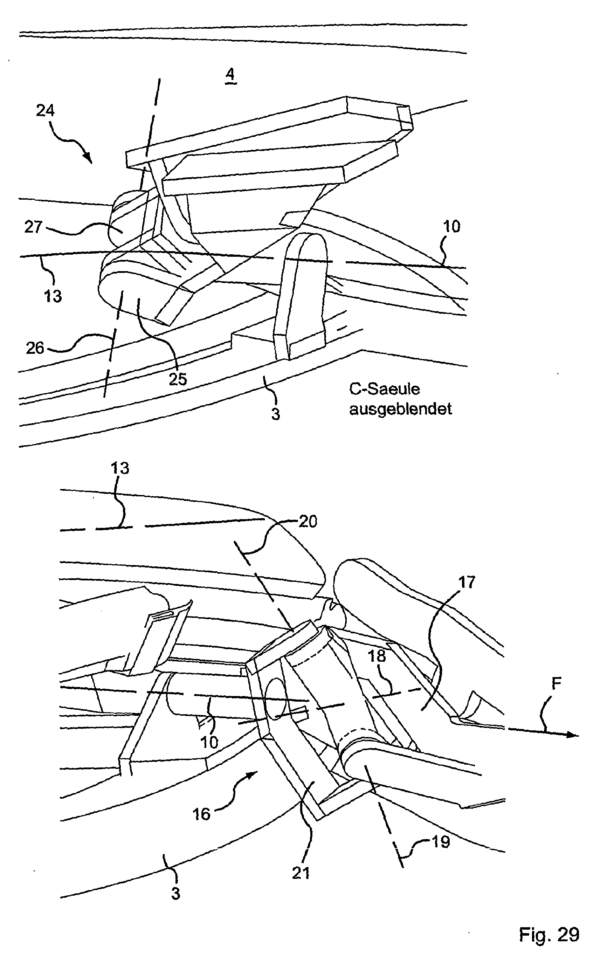

- Fig. 22: bis Fig. 29 die Phasen der Dachöffnung in perspektivischer Ansicht aus Richtung des Insassenraums auf die in Fahrtrich- tung linke hintere Dachecke des heraus- gezeichneten Daches, darin
- Fig. 22: das geschlossene Dach mit zusätzlich eingezeichneter Drehachse der C-Säule und Schwenkachsen des hinteren Dachteils gegenüber der Karosserie und der Dach- teile gegeneinander,

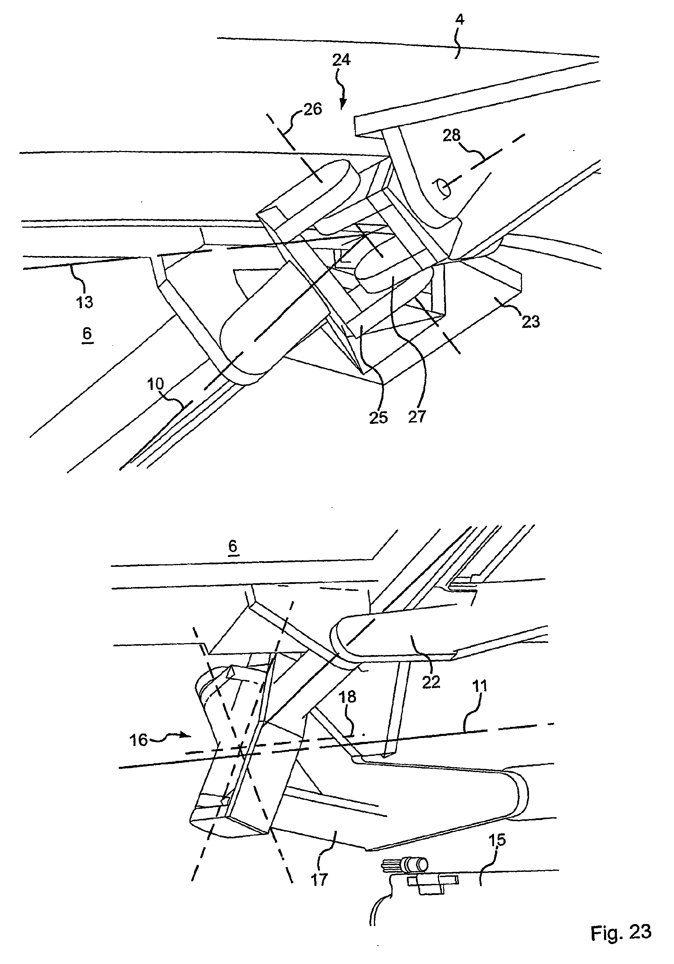

- Fig. 23: eine Detailansicht des oberen und des unteren räumlichen Getriebes in dieser Stellung,

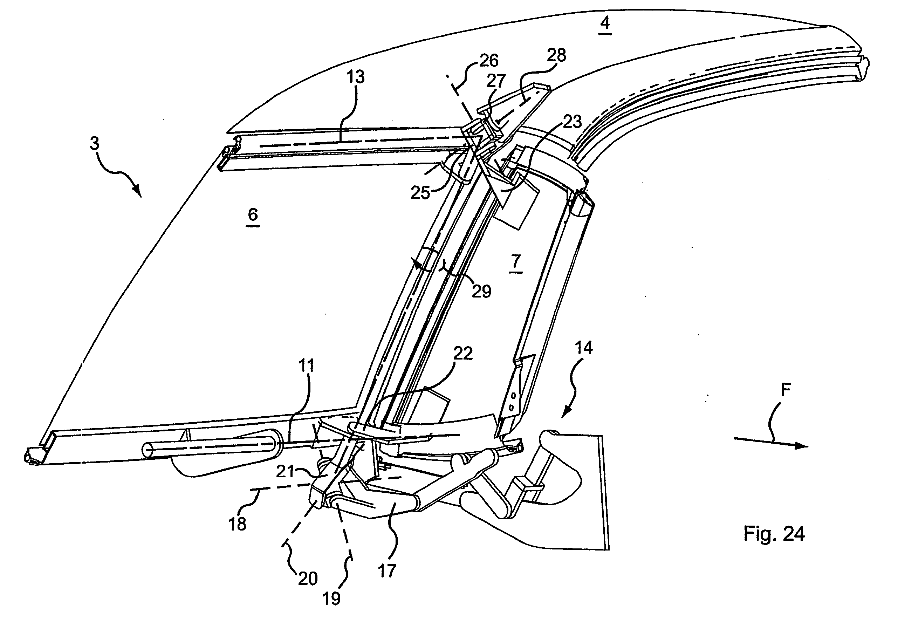

- Fig. 24: das Dach mit zusätzlich eingezeichneter Drehachse der C-Säule und Schwenkachsen des hinteren Dachteils gegenüber der Ka- rosserie und der Dachteile gegeneinander während seiner beginnenden Öffnung, etwa entsprechend der Stellung nach den Figu- ren 7 und 16,

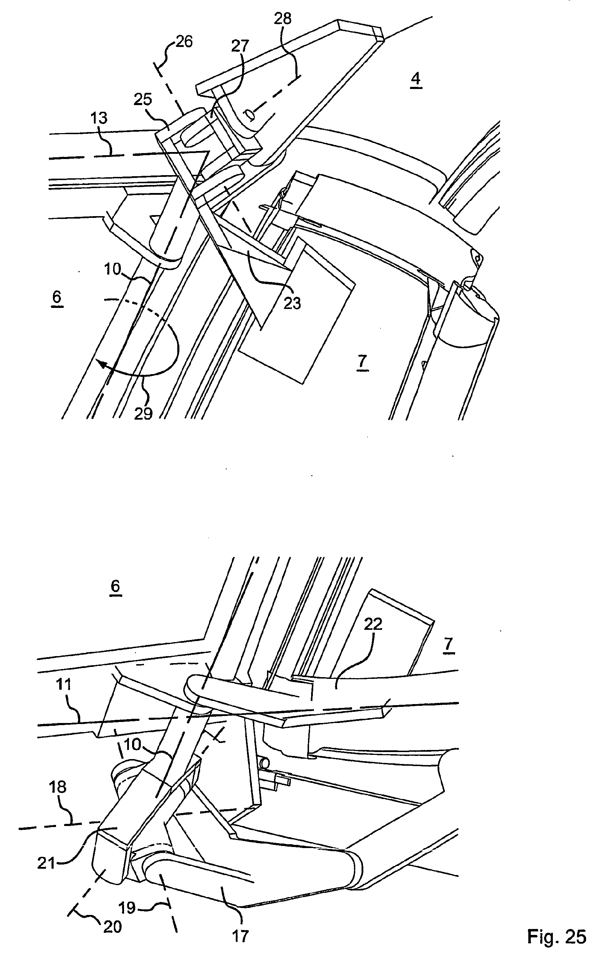

- Fig. 25: eine Detailansicht des oberen und des unteren räumlichen Getriebes in dieser Stellung,

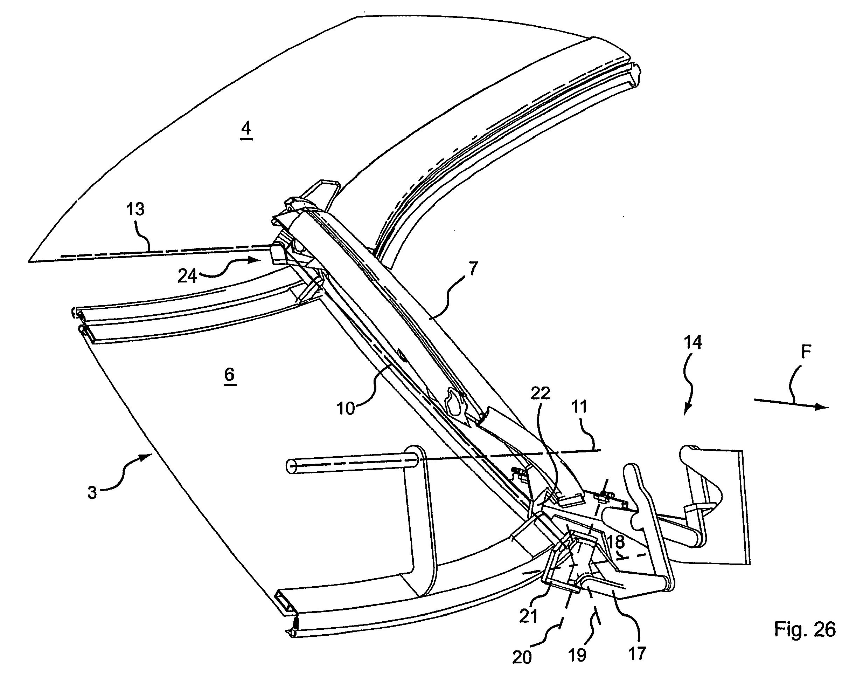

- Fig. 26: das Dach mit zusätzlich eingezeichneter Drehachse der C-Säule und Schwenkachsen des hinteren Dachteils gegenüber der Ka- rosserie und der Dachteile gegeneinander während seiner beginnenden Öffnung, etwa entsprechend der Stellung nach den Figu- ren 9 und 18,

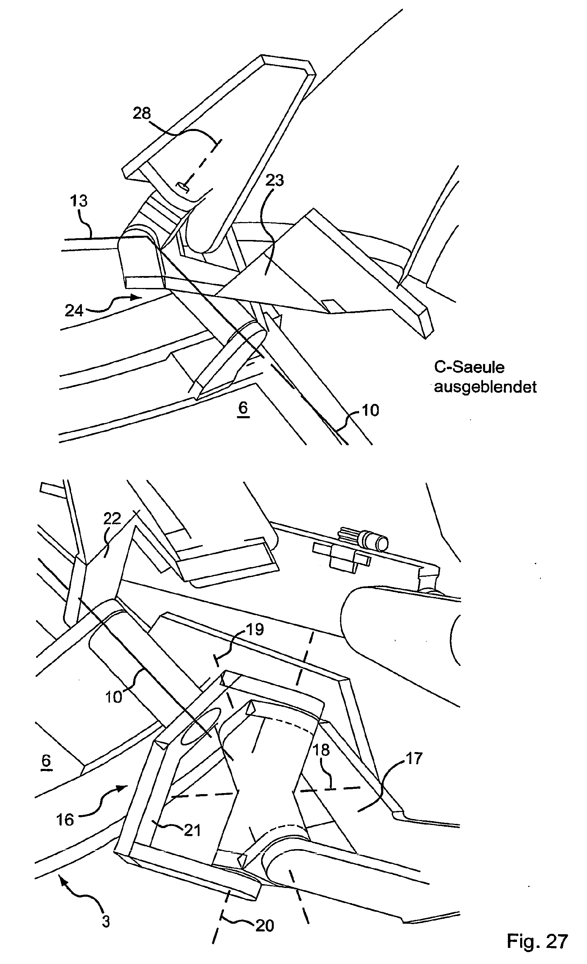

- Fig. 27: eine Detailansicht des oberen und des unteren räumlichen Getriebes in dieser Stellung,

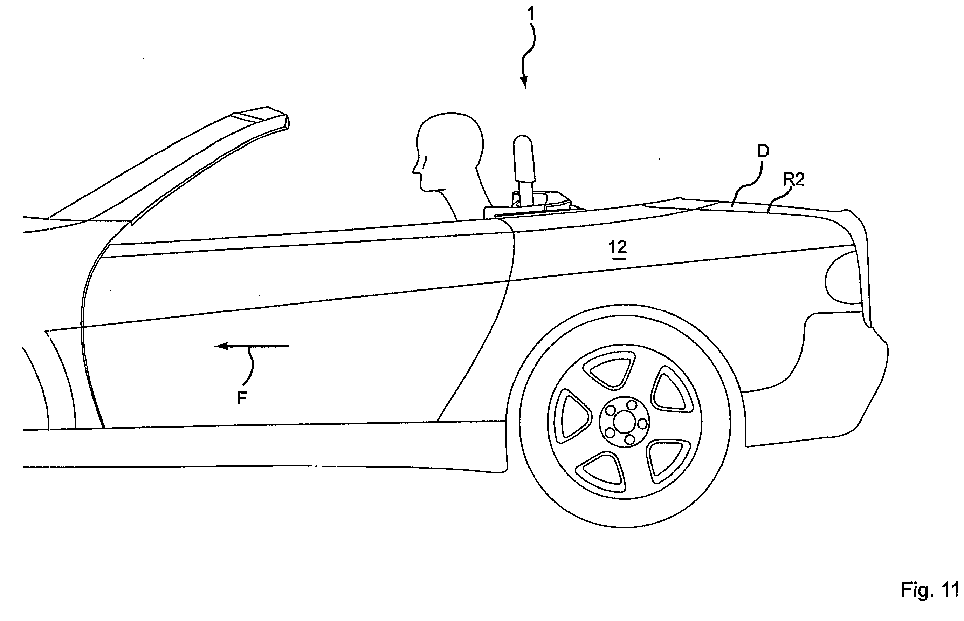

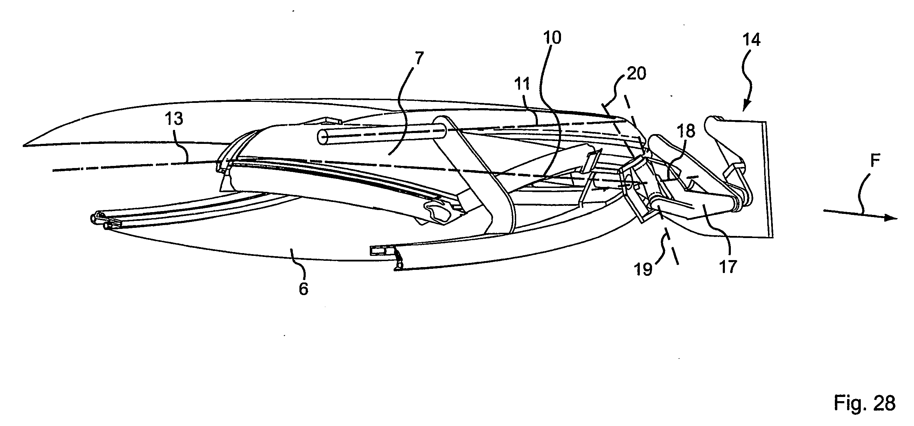

- Fig. 28: das Dach mit zusätzlich eingezeichneter Drehachse der C-Säule und Schwenkachsen des hinteren Dachteils gegenüber der Ka- rosserie und der Dachteile gegeneinander in seiner geöffneten Stellung, etwa ent- sprechend den Figuren 11 und 20"
- Fig. 29: eine Detailansicht des oberen und des unteren räumlichen Getriebes in dieser Stellung,

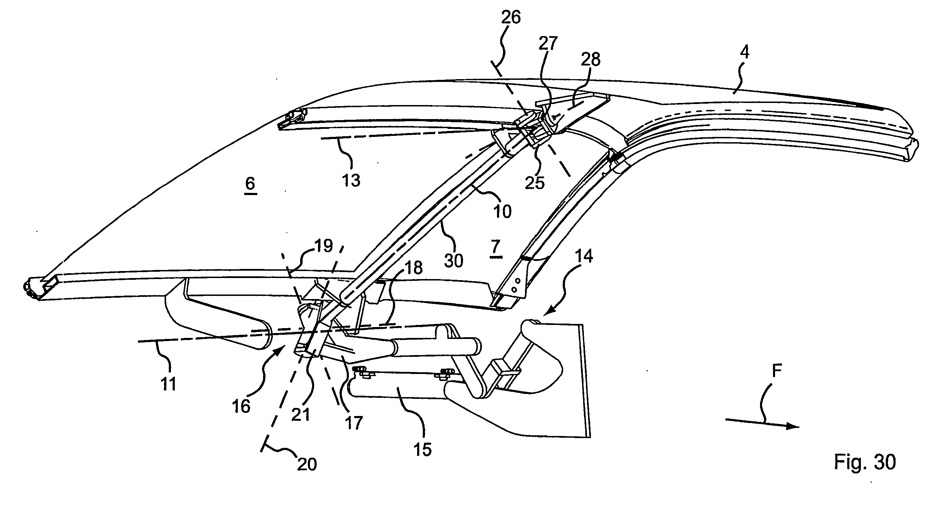

- Fig. 30: eine ähnliche Ansicht wie Fig. 22, je- doch mit einer durchgehenden, das obere und untere räumliche Getriebe verbinden- den Torsionsstange.

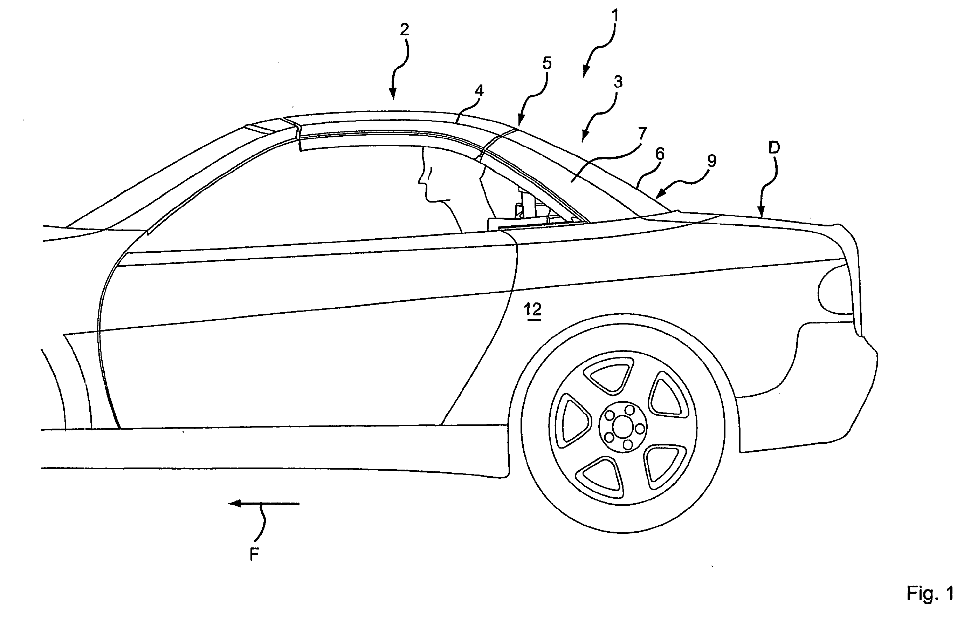

Das erfindungsgemäße Cabriolet-Fahrzeug 1 umfaßt in den dargestellten Ausführungsbeispielen zwei bei geschlossenem Dach 2 bezüglich der Fahrtrichtung F aufeinander folgende und an einer zumindest im wesentlichen quer zum Fahrzeug liegenden Fuge 5 voneinander getrennte Dachteile 3, 4. Das hintere Dachteil 3 umfaßt in einem bezüglich der Fahrzeugquerrichtung mittleren Abschnitt 9 eine Heckscheibe 6 und ragt schräg aufwärts. Die Heckscheibe 6 kann faltbar oder insbesondere starr ausgebildet sein und beispielsweise aus Kunststoff oder Glas bestehen. Das Dachteil 4 ist dem hinteren Dachteil 3 in geschlossener Stellung (Fig. 1) vorgeordnet und liegt im wesentlichen horizontal. Ein oder mehrere weitere bewegliche Dachteile können etwa mit dem vorderen Dachteil 4 beweglich verbunden, beispielsweise daran angelenkt sein. Das erfindungsgemäße Cabriolet-Fahrzeug 1 kann daher sowohl ein Zweisitzer sein als auch einen größeren Insassenraum mit zwei oder mehr Sitzreihen hintereinander umfassen.

Die Dachteile 3, 4 sind im wesentlichen aus starren Teilen gebildet, umfassen zumindest starre Rahmen, über die ein Bezug gespannt sein kann.

Das hintere Dachteil 3 ist geteilt und umfaßt außer dem mittleren Abschnitt 9 zumindest im wesentlichen seitlich neben diesem gelegene C-Säulen 7. Diese können auch Querausleger oder ähnliches umfassen, die sich ober- oder unterhalb der Heckscheibe 6 in Richtung einer vertikalen Längsmittelebene 8 erstrecken. Die C-Säulen 7 sind bei der Dachöffnung gegenüber dem mittleren Abschnitt 9 mit der Heckscheibe 6 des Dachteils 3 um Drehachsen 10 einschwenkbar, die bei geschlossenem Dach 2 jeweils eine Komponente in Fahrtrichtung F, eine quer zur Fahrtrichtung F und eine aufwärts gerichtete Komponente aufweisen. In den hier gezeigten Ausführungsbeispielen liegen die Drehachsen 10 parallel zur Erstreckungsebene des hinteren Dachteils 3 und parallel zu den seitlichen Rändern 6a der Heckscheibe 6, was nicht zwingend ist.

Zur Dachöffnung ist das hintere Dachteil 3 heckwärts und abwärts verlagerbar und das vorgeordnete Dachteil 4 an das hintere Dachteil 3 heranschwenkbar.

Die Verlagerung des hinteren Dachteils 3 erfolgt um eine horizontale und quer zum Fahrzeug 1 liegende erste Schwenkachse 11, die bezüglich der Karosserie 12 ortsfest oder während der Öffnung verlagerbar sein kann. Die Ablagebewegung kann auch eine überlagerte Bewegung mit translatorischen und rotatorischen Anteilen sein. Im Ausführungsbeispiel ist diese Schwenkachse 11 ortsfest bezüglich der Karosserie 12.

Das Heranschwenken des vorgeordneten Dachteils 4 an das hintere Dachteil 3 erfolgt um eine zweite, mit diesem bewegbare obere horizontale Schwenkachse 13.

Das Dach 2 ist über seitliche Hauptlager 14 an der Karosserie 12 beweglich gehalten. Die Öffnungs- oder Schließbewegung des hinteren Dachteils 3 ist dabei durch um hier zwei diese bewegende seitliche Antriebe 15 bewirkbar. Auch ein nur einzelner seitlicher oder mittiger Antrieb 15 kann ausreichend sein. Im Ausführungsbeispiel liegen an beiden Fahrzeugseiten gleichartige bauliche Verhältnisse vor, wobei zwei seitliche Antriebe 15 vorgesehen sind.

Um die horizontale erste Schwenkachse 11 schwenken beim Dachöffnen oder -schließen zwei die Drehachsen 10 der C-Säulen kreuzende und seitlich liegende untere räumliche Getriebe 16. Diese sind in den Ausführungsbeispielen als Kreuzgelenke ausgebildet, was nicht zwingend, jedoch mechanisch besonders einfach und in der Funktion zuverlässig ist.

Die unteren Kreuzgelenke 16 sind jeweils an einem beweglichen, schräg zu den Kreuzgelenken 16 stehenden Gabelhebel 17 gehalten. Dieser ist um eine horizontale, quer zum Fahrzeug 1 verlaufende und während der Dachöffnung auf einer Kreisbahn um die erste Schwenkachse 11 herum bewegbare Achse 18 schwenkbar. Innerhalb der Gabelaufnahme des Hebels 17 ist ein erster Arm eines x-förmigen Kreuzkörpers gehalten, in dessen Zentrum sich die Achse 19 dieses Arms mit der Achse 20 des zweiten Arms in spitzem Winkel schneidet. Auch die Achse 18 schneidet diesen Punkt. Der zweite Arm des Kreuzkörpers mit seiner Drehachse 20 ist von einer zweiten Gabelaufnahme 21 eingefaßt, die schräg zur Drehachse 10 steht und mit letzterer verbunden ist. Da auch die Drehachse 10 den Kreuzungspunkt der Achsen 18, 19, 20 schneidet, ist das räumliche Getriebe 16 daher als sphärisches Getriebe ausgebildet.

Ein Schwenken des hinteren Dachteils 3 um die Schwenkachse 11 bewirkt somit zwangsweise ein Drehen der Drehachsen 10, ohne daß es hierfür eines eigenen Antriebs bedarf. Die C-Säulen 7 hängen über seitlich von den Drehachsen 10 ausgreifende Ausleger 22 an den Drehachsen 10, so daß sie von der Drehachse 10 mitgedreht werden.

Im ersten Ausführungsbeispiel sind die Drehachsen 10 im unteren Bereich als Achsstummel ausgebildet und reichen nur von den Kreuzgelenken 16 bis zu den Auslegern 22. Diese übertragen die Drehbewegung weiter auf die weiter außen liegenden C-Säulen 7 und über obere Ausleger 23 wieder einwärts auf obere Kreuzgelenke 24, die als obere räumliche Getriebe die Drehbewegung der C-Säulen 7 um die Drehachsen 10 in die Heranschwenkbewegung zwischen den Dachteilen 3, 4 um die obere Schwenkachse 13 übersetzen. Dadurch, daß die Drehachsen 10 der C-Säulen 7 im oberen und unteren Bereich über Ausleger 22, 23, durch die hindurch die Drehachsen 10 verlaufen, mit den weiter außen liegenden C-Säulen verbunden sind, können diese über einen bezüglich der Vertikalen mittleren Teil ihrer Erstreckung mit ihren der Fahrzeugmitte 8 zugewandten Kanten weiter außen verlaufen. Die äußeren Ränder 6a der Heckscheibe 6 können somit seitlich außerhalb der Drehachsen 10 liegen, ohne von diesen überdeckt zu werden. Die Sicht nach hinten ist dadurch optimiert.

Insgesamt ist somit das hintere Dachteil 3 zu seiner Verlagerüngsbewegung um eine quer zum Fahrzeug liegende erste Schwenkachse 11 schwenkbar, das vorgeordnete Dachteil 4 gegenüber dem hinteren Dachteil 3 um eine parallel hierzu liegende zweite Schwenkachse 13 schwenkbar, und die Drehachsen 10 der C-Säulen 7 koppeln die Bewegungen um beide Schwenkachsen 11, 13.

Die Kreuzgelenke 24 im oberen Bereich der Drehachsen 10 übersetzen ebenfalls ohne weitere Antriebe die Drehbewegung der C-Säulen 7 um die Schwenkachsen 10 in die Schwenkbewegung des vorgeordneten Dachteils 4 gegenüber dem hinteren Dachteil 3 um die quer zum Fahrzeug und horizontal liegende zweite Schwenkachse 13.

Hierzu umfassen die Kreuzgelenke 24 jeweils eine schräg zur Drehachse 10 stehende Gabelaufnahme 25, in die die Drehachsen 10 einmünden. Diese ist über eine erste Hilfsachse 26 mit einer zweiten Gabelaufnahme 27 verbunden, die an dem vorgeordneten Dachteil 4 um eine zweite Hilfsachse 28 schwenkbar angelenkt ist. Durch das über die Ausleger 23 von den C-Säulen 7 eingeleitete Drehmoment um die Drehachsen 10 wird die Gabelaufnahme 25 bei der Dachöffnung in Richtung des Pfeils 29 verschwenkt und zieht dabei die gegenüber liegende Gabelaufnahme 27 nach unten in Richtung des hinteren Dachteils 3, so daß das vorgeordnete Dachteil 4 zwangsweise um die Schwenkachse 13, die beide Hilfsachsen 26, 28 und die Drehachsen 10 kreuzt, einschwenkt. Auch das obere Getriebe 24 ist daher ein sphärisches Getriebe, bei dem sich alle Achsen 10, 26, 28, 13 in einem Punkt schneiden.

Damit genügt insgesamt zur Bewegung des hinteren Dachteils 3 um die quer zum Fahrzeug 1 liegende erste Schwenkachse 11, des vorgeordneten Dachteils 4 um die zweite Horizontalschwenkachse 13 und zur Drehbewegung der C-Säulen 7 um die Drheachsen 10 ein einziger Antrieb 15, über den direkt die Bewegung des hinteren Dachteils 3 um die erste Schwenkachse 11 antreibbar ist.

Im ersten Ausführungsbeispiel sind dabei die Drehachsen 10 der C-Säulen 7 zumindest bereichsweise von Antriebswellen umfaßt, so daß das Heranschwenken des vorgeordneten Dachteils 4 über die Drehbewegung der C-Säulen 7 vermittelbar und hierfür im Bereich der Fuge 5 zwischen den Dachteilen 3, 4 in eine Schwenkbewegung zwischen diesen übersetzbar ist.

Alternativ kann auch, wie im zweiten Ausführungsbeispiel nach Fig. 30 gezeigt ist, an jeder Fahrzeugseite eine durchgehende Torsionsstange 30 angeordnet sein, an die die C-Säulen angehängt sind. Dann übernehmen die C-Säulen selbst keine kraftvermittelnde Funktion zur Einleitung eines Drehmoments in das obere Dachteil, sondern die Kraftvermittlung wird vielmehr allein über die durchgehende Torsionsstange 30 bewirkt.

In beiden Ausführungsbeispielen werden während der Dachöffnung die C-Säulen 7 um die Drehachsen 10 derart gegenüber dem mittleren Abschnitt 9 eingeschwenkt, daß sie in geöffneter Dachstellung zwischen den Dachteilen 3, 4 und dabei gleichsinnig zum vorderen Dachteil 4 gewölbt liegen. Da die Dachteile 3, 4 ohnehin in abgelegter Stellung gegensinnig gekrümmt zueinander liegen, kann der dazwischen entstehende Hohlraum ohne weiteren Raumverlust sehr vorteilhaft für die einschwenkenden C-Säulen 7 genutzt werden.

Das gesamte bewegliche Dach 2 kann vor Einbau in den Rohbau auf Funktion getestet werden; die so fertig eingestellte modulare Einheit kann dann an den Rohbau angeliefert und lediglich über seitliche Hauptlager 14 mit diesem verbunden werden.

Die Erfindung ist sowohl bei Fahrzeugen mit manuell zu bewegenden Dächern auch insbesondere bei voll- oder teilautomatischer Beweglichkeit des Daches 2 anwendbar.

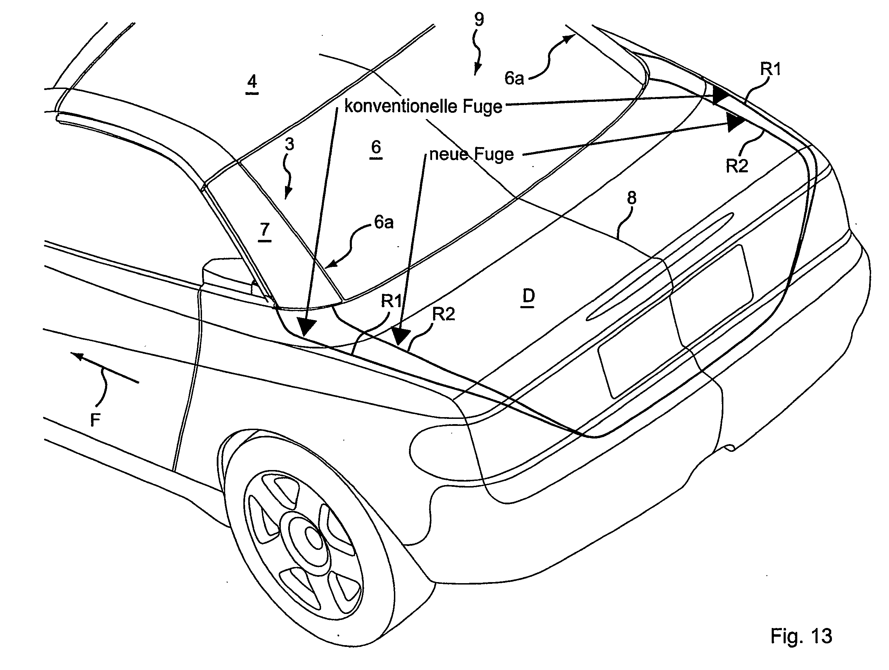

Mit der Verschmälerung des Daches 2 durch Eindrehen der C-Säulen 7 beim Öffnen ist in jedem Fall auch eine Verschmälerung des Verdeckkastendeckels D möglich. Dessen seitlicher Rand muß nun nicht mehr wie im Stand der Technik bis zur seitlich außerhalb der Durchtrittsbreite für die C-Säulen liegenden Fuge R1 erstreckt sein, sondern kann an der näher zur Fahrzeugmitte 8 gerückten Randfuge R2, die bei geöffnetem Verdeckkastendeckel D lediglich eine hinreichende Durchtrittsbreite für den mittleren Bereich 9 beläßt, enden (Fig. 13), wodurch das Design im Heckbereich deutlich verbessert ist.

## Patentansprüche

1. Cabriolet-Fahrzeug (1) mit einem eine Heckscheibe (6) und seitlich zumindest im wesentlichen neben dieser gelegene C-Säulen (7) umfassenden hinteren Dachteil (3), an das sich in geschlossener Dachstellung in Fahrtrichtung (F) zumindest ein vorgeordnetes Dachteil (4) anschließt, wobei zur Dachöffnung das hintere Dachteil (3) heckwärts und abwärts verlagerbar und das vorgeordnete Dachteil (4) an das hintere Dachteil (3) heranschwenkbar ist,
**dadurch gekennzeichnet,**
**daß** bei der Dachöffnung die C-Säulen (7) gegenüber einem die Heckscheibe (6) umfassenden Mittelabschnitt (9) um Drehachsen (10) in eine bei geöffnetem Dach oberhalb des Mittelabschnitts liegende Stellung einschwenkbar sind, wobei die Drehachsen (10) bei geschlossenem Dach (2) jeweils zumindest eine Komponente in Fahrtrichtung (F) und eine aufwärts gerichtete Komponente aufweisen und parallel zu den seitlichen Rändern (6a) der Heckscheibe (6) liegen.

2. Cabriolet-Fahrzeug (1) nach Anspruch 1,
**dadurch gekennzeichnet,**
**daß** die C-Säulen (7) an den Mittelabschnitt (9) angehängt sind.

3. Cabriolet-Fahrzeug (1) nach einem der Ansprüche 1 oder 2,
**dadurch gekennzeichnet,**
**daß** die C-Säulen (7) in geöffneter Dachstellung zwischen den Dachteilen (3;4) halterbar sind.

4. Cabriolet-Fahrzeug (1) nach einem der Ansprüche 1 bis 3,
**dadurch gekennzeichnet,**
**daß** die Drehachsen (10) der C-Säulen (7) parallel zur Erstreckungsbene des hinteren Dachteils (3) liegen.

5. Cabriolet-Fahrzeug (1) nach einem der Ansprüche 1 bis 4,
**dadurch gekennzeichnet,**
**daß** die Drehachsen (10) der C-Säulen (7) zumindest bereichsweise von Antriebswellen umfaßt sind, so daß das Heranschwenken des vorgeordneten Dachteils (4) über die Drehbewegung der C-Säulen (7) vermittelbar und hierfür im Bereich der Fuge (5) zwischen den Dachteilen (3;4) in eine Schwenkbewegung zwischen diesen übersetzbar ist.

6. Cabriolet-Fahrzeug (1) nach Anspruch 5,
**dadurch gekennzeichnet,**
**daß** zur Übersetzung der Drehbewegung der C-Säulen (7) in die Heranschwenkbewegung zwischen den Dachteilen (3;4) ein oberes räumliches Getriebe (24) angeordnet ist.

7. Cabriolet-Fahrzeug (1) nach einem der Ansprüche 5 oder 6,
**dadurch gekennzeichnet,**
**daß** zum Antrieb der Drehbewegung der C-Säulen (7) ein unteres räumliches Getriebe (16) vorgesehen ist, das eine Verlagerungsbewegung des hinteren Dachteils (3) in eine Drehbewegung der C-Säulen (7) um die Drehachsen (10) übersetzt.

8. Cabriolet-Fahrzeug (1) nach einem der Ansprüche 1 bis 7,
**dadurch gekennzeichnet,**
**daß** das hintere Dachteil (3) um eine quer zum Fahrzeug (1) liegende erste Achse (11) schwenkbar ist, das vorgeordnete Dachteil (4) gegenüber dem hinteren Dachteil um eine parallel hierzu liegende zweite Achse (13) schwenkbar ist und die Drehachsen (10) beide Drehbewegungen miteinander koppeln.

9. Cabriolet-Fahrzeug (1) nach einem der Ansprüche 1 bis 8,
**dadurch gekennzeichnet,**
**daß** zur Bewegung des hinteren Dachteils (3) um eine quer zum Fahrzeug liegende erste Achse (11), des vorgeordneten Dachteils (4) um eine zweite Achse (13) und zur Drehbewegung der C-Säulen (7) ein einziger Antrieb (15) vorgesehen ist, der zur Bewirkung der Bewegung des hinteren Dachteils (3) um eine quer zum Fahrzeug (1) liegende erste Achse (11) dient.

10. Cabriolet-Fahrzeug (1) nach einem der Ansprüche 5 bis 9,
**dadurch gekennzeichnet,**
**daß** das obere und/oder das untere räumliche Getriebe (24;16) jeweils als sphärisches Getriebe ausgebildet sind.

11. Cabriolet-Fahrzeug (1) nach Anspruch 10,
**dadurch gekennzeichnet,**
**daß** das obere (24) und/oder das untere räumliche Getriebe (16) jeweils zumindest ein Kreuzgelenk umfassen.

12. Cabriolet-Fahrzeug (1) nach einem der Ansprüche 1 bis 11,
**dadurch gekennzeichnet,**
**daß** an beiden Fahrzeugseiten gleichartige bauliche Verhältnisse vorliegen.

13. Cabriolet-Fahrzeug (1) nach einem der Ansprüche 1 bis 12,
**dadurch gekennzeichnet,**
**daß** die Drehachsen (10) der C-Säulen (7) im oberen und unteren Bereich zur vertikalen Fahrzeuglängsmittelebene weisende Ausleger (23) aufweisen, durch die hindurch die Drehachsen (10) verlaufen, wohingegen die C-Säulen (7) über einen bezüglich der Vertikalen mittleren Teil ihrer Erstreckung mit ihren der Fahrzeugmitte (8) zugewandten Kante gegenüber den Auslegern (23) weiter außen verlaufen.

## Claims

1. Cabriolet vehicle (1) with a rear roof part (3) comprising a rear window (6) and C-pillars (7) located laterally at least substantially beside rear window (6), which roof part (3) is adjoined in the closed roof position in the direction of travel (F) by at least one roof part (4) arranged in front, whereby, for roof opening, the rear roof part (3) is displaceable towards to the rear and downwards and the roof part (4) arranged in front can be pivoted onto the rear roof part (3),
**characterised in that,**
in the event of roof opening, the C-pillars (7) can be pivoted relative to a central portion (9) comprising the rear window (6) about rotational axes (10) into a position lying above the central portion when the roof is open, whereby the rotational axes (10), when the roof (2) is closed, respectively have at least one component in the direction of travel (F) and an upwardly directed component and lie parallel to the lateral edges (6a) of the rear window (6).

2. Cabriolet vehicle (1) according to Claim 1,
**characterised in that**
the C-pillars (7) are attached to the central portion (9).

3. Cabriolet vehicle (1) according to one of Claims 1 or 2,
**characterised in that**
the C-pillars (7), in the open roof position, can be mounted between the roof parts (3; 4).

4. Cabriolet vehicle (1) according to one of Claims 1 to 3,
**characterised in that**
the rotational axes (10) of the C-pillars (7) lie parallel to the extension plane of the rear roof part (3).

5. Cabriolet vehicle (1) according to one of Claims 1 to 4,
**characterised in that**
the rotational axes (10) of the C-pillars (7) are comprised at least in sections by drive shafts such that the pivoting of the roof part (4) arranged in front can be imparted via the rotational movement of the C-pillars (7) and, for this purpose, can be translated in the region of the joint (5) between the roof parts (3; 4) into a pivoting movement between these.

6. Cabriolet vehicle (1) according to Claim 5,
**characterised in that**
an upper spatial transmission (24) is arranged between the roof parts (3; 4) to translate the rotational movement of the C-pillars (7) into the pivoting movement.

7. Cabriolet vehicle (1) according to one of Claims 5 or 6,
**characterised in that**
a lower spatial transmission (16) is provided to drive the rotational movement of the C-pillars (7), which transmission (16) translates a displacement movement of the rear roof part (3) into a rotational movement of the C-pillars (7) about the rotational axes (10).

8. Cabriolet vehicle (1) according to one of Claims 1 to 7,
**characterised in that**
the rear roof part (3) can be pivoted about a first axis (11) lying transverse to the vehicle (1), the roof part (4) arranged in front can be pivoted relative to the rear roof part about a second axis (13) lying parallel to this and the rotational axes (10) couple both rotational movements with one another.

9. Cabriolet vehicle (1) according to one of Claims 1 to 8,
**characterised in that**
a single drive (15), which acts to bring about the movement of the rear roof part (3) about a first axis (11) lying transverse to the vehicle (1), is provided for the movement of the rear roof part (3) about a first axis (11) lying transverse to the vehicle, of the roof part (4) arranged in front about a second axis (13) and for rotational movement of the C-pillars (7).

10. Cabriolet vehicle (1) according to one of Claims 5 to 9,
**characterised in that**
the upper and/or the lower spatial transmission (24; 16) are respectively formed as a spherical transmission.

11. Cabriolet vehicle (1) according to Claim 10,
**characterised in that**
the upper (24) and/or the lower spatial transmission (16) respectively comprise at least one cardan joint.

12. Cabriolet vehicle (1) according to one of Claims 1 to 11,
**characterised in that**
similar structural conditions are present on both vehicle sides.

13. Cabriolet vehicle (1) according to one of Claims 1 to 12,
**characterised in that**
the rotational axes (10) of the C-pillars (7) have, in the upper and lower region, arms (23) pointing towards the vertical vehicle longitudinal central plane, through which arms (23) the rotational axes (10) run, whereas the C-pillars (7) run further to the outside with respect to the arms (23) along a central part, relative to the verticals, of their extension with their edge that faces the vehicle centre (8).

## Revendications

1. Véhicule cabriolet (1) comprenant un élément de toit (3) arrière qui comporte une lunette arrière (6) et des colonnes C (7) disposées latéralement au moins substantiellement à côté de celle-ci et auquel est relié au moins un élément de toit (4) disposé en amont en position de fermeture du toit dans le sens de la marche (F), pour l'ouverture de toit, l'élément de toit (3) arrière pouvant être déplacé vers l'arrière et vers le bas et l'élément de toit (4) disposé en amont pouvant être pivoté et approché contre l'élément de toit (3) arrière,
**caractérisé en ce que,**
lors de l'ouverture de toit, les colonnes C (7) peuvent être pivotées, par rapport à une section médiane (9) comprenant la lunette arrière (6), autour des axes de rotation (10), lorsque le toit (2) est fermé, les axes de rotation (10) présentant chacun au moins une composante dans le sens de la marche (F) et une composante orientée vers le haut et étant parallèles aux bords (6a) latéraux de la lunette arrière (6).

2. Véhicule cabriolet (1) selon la revendication 1,
**caractérisé en ce que**
les colonnes C (7) sont montées sur la section médiane (9).

3. Véhicule cabriolet (1) selon l'une des revendications 1 ou 2,
**caractérisé en ce que**
les colonnes C (7) peuvent être maintenues entre les éléments de toit (3 ; 4) quand le toit est en position ouverte.

4. Véhicule cabriolet (1) selon l'une des revendications 1 à 3,
**caractérisé en ce que**
les axes de rotation (10) des colonnes C (7) sont disposés parallèlement au plan d'extension de l'élément de toit (3) arrière.

5. Véhicule cabriolet (1) selon l'une des revendications 1 à 4,
**caractérisé en ce que**
les axes de rotation (10) des colonnes C (7) sont entourés, au moins en partie, par des arbres d'entraînement si bien que l'approche par pivotement de l'élément de toit (4) disposé en amont peut être transmise par l'intermédiaire du mouvement de rotation des colonnes C (7) et, pour cela, peut être convertie, dans la zone du joint (5) entre les éléments de toit (3 , 4), en un mouvement de pivotement entre lesdits éléments.

6. Véhicule cabriolet (1) selon la revendication 5,
**caractérisé en ce que**
un engrenage spatialement supérieur (24) est disposé pour la conversion du mouvement de rotation des colonnes C (7) en un mouvement de pivotement entre les éléments de toit (3 ; 4).

7. Véhicule cabriolet (1) selon l'une des revendications 5 ou 6,
**caractérisé en ce que,**
pour l'entraînement du mouvement de rotation des colonnes C (7), il est prévu un engrenage spatialement inférieur (16) qui convertit un mouvement de déplacement de l'élément de toit (3) arrière en un mouvement de rotation des colonnes C (7) autour des axes de rotation (10).

8. Véhicule cabriolet (1) selon l'une des revendications 1 à 7,
**caractérisé en ce que**
l'élément de toit (3) arrière peut pivoter autour d'un premier axe (11) disposé transversalement au véhicule (1), **en ce que** l'élément de toit (4) disposé en amont peut pivoter, par rapport à l'élément de toit (3) arrière, autour d'un second axe (13) parallèle à ce dernier et **en ce que** les axes de rotation (10) couplent les deux mouvements de rotation l'un avec l'autre.

9. Véhicule cabriolet (1) selon l'une des revendications 1 à 8,
**caractérisé en ce que,**
pour le mouvement de l'élément de toit (3) arrière autour d'un premier axe (11) disposé transversalement au véhicule, pour le mouvement de l'élément de toit (4) disposé en amont autour d'un second axe (13) et pour le mouvement de rotation des colonnes C (7), il est prévu un seul entraînement (15) qui permet d'effectuer le mouvement de l'élément de toit (3) arrière autour d'un premier axe (11) disposé transversalement au véhicule (1).

10. Véhicule cabriolet (1) selon l'une des revendications 5 à 9,
**caractérisé en ce que**
les engrenages (24 ; 16) spatialement supérieurs et/ou inférieurs sont respectivement conçus sous forme d'engrenages sphériques.

11. Véhicule cabriolet (1) selon la revendication 10,
**caractérisé en ce que**
les engrenages (24 ; 16) spatialement supérieurs et/ou inférieurs comprennent chacun au moins un joint universel.

12. Véhicule cabriolet (1) selon l'une des revendications 1 à 11,
**caractérisé en ce que,**
des deux côtés du véhicule, il est prévu des rapports de construction similaires.

13. Véhicule cabriolet (1) selon l'une des revendications 1 à 12,
**caractérisé en ce que**
les axes de rotation (10) des colonnes C (7) présentent, dans la partie supérieure et dans la partie inférieure, des bras (23) orientés vers le plan médian longitudinal du véhicule et traversés par les axes de rotation (10) tandis que, par leur bord tourné vers le milieu (8) du véhicule, par rapport aux bras (23), les colonnes C (7) se prolongent à l'extérieur sur une partie centrale, par rapport à la verticale, de leur extension.
